Europäisches Patentamt

European Patent Office

Office européen des brevets

(11) Publication number: **0 245 970**
A1

## EUROPEAN PATENT APPLICATION

(21) Application number: **87303373.2**

(22) Date of filing: **16.04.87**

(51) Int. Cl.³: **A 01 N 25/24**
**A 01 N 25/14, A 01 N 25/10**

(30) Priority: **25.04.86 US 856080**

(43) Date of publication of application:
**19.11.87 Bulletin 87/47**

(84) Designated Contracting States:
**AT BE CH DE ES FR GB GR IT LI LU NL SE**

(71) Applicant: **Rohm and Haas Company**
**Independence Mall West**
**Philadelphia, Pennsylvania 19105(US)**

(72) Inventor: **Kostansek, Edward Charles**
**P.O. Box 337**
**Buchingham Pennsylvania 18912(US)**

(74) Representative: **Angell, David Whilton et al,**
**ROHM AND HAAS (UK) LTD. European Operations Patent**
**Department Lennig House 2 Mason's Avenue**
**Croydon CR9 3NB(GB)**

(54) Dithiocarbamate compostions having increased rain fastness.

(57) The rain fastness of dithiocarbamates in dry form is enhanced by formulation with nonionic water-soluble polymer comprising hydroxy($C_2$-$C_5$) alkyl cellulose, polyethylene oxide, polyvinyl alcohol, polyvinyl pyrrolidone, polyacrylamide and/or polyvinylmethylether in an amount of from about 0.1 to about 5 weight percent based on the weight of the dithiocarbamate.

EP 0 245 970 A1

Croydon Printing Company Ltd

## DITHIOCARBAMATE COMPOSITIONS
## HAVING INCREASED RAIN FASTNESS

The present invention is concerned with dithiocarbamate compositions of enhanced rain fastness. These compositions are useful in the control of phytopathogenic fungi.

Dithiocarbamates and derivatives thereof are a class of fungicides useful in the control of phytopathogenic fungi. Examples of dithiocarbamate fungicides include mancozeb, maneb, zineb, propineb, ferbam, ziram, metham, thiram and dazomet. Dithiocarbamates, like most fungicides and other pesticides, tend to be washed off plants by rain.

The literature contains several suggestions for use of polymers with pesticides, for example, to increase the adhesion of the pesticide or to increase its resistance to rain. Dithiocarbamate salts have been combined with a larger amount (1:1 to 1:30) of a water-insoluble vinyl acetate polymer to increase the resistance of the dithiocarbamate to removal by weathering (rain). Central Patents Index, Basic Abstracts Journal, CO3-54361Y/31 Derwent Publications Ltd., London (1977). However, because the polyvinyl acetate forms a film, it is not conducive for formulating the dithiocarbamate in a dry or powder form. Moreover, due to the polymer's insolubility, the equipment used to apply such pesticides cannot be readily cleaned with water. Chemical Abstracts: 72, 11637a (1970) discloses the addition of polyvinyl alcohol to fungicides to increase the affinity of the fungicide to foliage. The polyvinyl alcohols have a molecular weight of about 150,000 to about 500,000 and a saponification index of 30 or less which are only readily soluble in water having a temperature of above about 100°F.

The use of ionic polymers as additives has also been suggested. U.S. 2,236,545 suggests the use of carboxymethyl cellulose as a sticking agent for insecticides. Carboxymethyl cellulose has also been used as a binder in granular pesticide formulations which utilize mono-, di- and poly-saccharides as stickers, Chemical Abstracts: 87, 147082h (1977). Ionic water-soluble acrylamide copolymer resins have been suggested for enhancing the initial activity of bactericides, fungicides, insecticides and plant growth regulators, Chemical Abstracts: 80 141786z (1974).

Polyoxyalkylenepolyols having a molecular weight of 200-25,000 increase the adhesion of finely granulated pesticides. These are acting as surfactants and in the presence of rain the pesticide is readily washed off the plant, Central Patents Index, Basic Abstracts Journal, CO3-38356U-AC, Derwent Publications Ltd., London (1973). It has also been recognized that the residual insecticidal activity (in the absence of rain) of phosdrin may be increased by the addition of polyethylene, hydroxyethyl cellulose and methyl cellulose polymers, but that conventional stickers and/or spreaders do not enhance the effectiveness of phosdrin's residues, Aller, et al., J. Econ. Ent., 54 (3), pp 508-510 (1961).

We have now surprisingly found that certain non-ionic polymers are useful for improving the rain fastness of certain form of dithiocarbamates. Unlike the prior art anionic polymers, the nonionic polymers used in the dithiocarbamate compositions of the present invention are not prone to give the flocculation problems as a result of high molecular weight ionic polymers interacting with the divalent cations of dithiocarbamates. The high molecular weight polymers utilized in the present invention have no, or minimal, surfactant properties so they are less apt to be washed off a plant by rain. Moreover, the polymers used in the present invention dissolve readily in water at the ambient temperatures at which fungicides are applied to plants, seeds or plant habitats, e.g., fields.

The present invention provides compositions comprising dry form dithiocarbamate and water-soluble, nonionic polymer which comprises hydroxy$(C_2-C_5)$alkyl cellulose, poly(ethylene oxide), poly(vinyl alcohol) having a saponification index of from about 45 to about 150, poly(vinyl pyrrolidone), poly(acrylamide) and/or poly(vinylmethylether), in an amount sufficient to increase the rain fastness of the dithiocarbamate.

Rain fastness relates to the ability of the dithiocarbamate to remain on foliage, seed or soil after rain or a heavy dew. The use of the dithiocarbamate composition of the invention as an agricultural fungicide, wherein dithiocarbamate is less readily removed from the plant, seed or soil by heavy dew or rain, may give a longer lasting activity of the dithiocarbamate under adverse weather conditions such as rain or wind, may result in a lower rate of use under adverse weather conditions and/or may allow for a longer period of time between applications of the fungicide.

The dithiocarbamates which are used in this invention comprise a chemical class of fungicides, including their derivatives, which have activity against phytopathogenic fungi. Examples of such dithiocarbamates include maneb (manganese ethylenebis-dithiocarbamate), mancozeb (the zinc ion coordination product of maneb), zineb (zinc ethylenebisdithio-
carbamate), propineb (zinc propylenebisdithiocarbamate), metham (sodium methyldithiocarbamate),
ferbam (ferric dimethyldithiocarbamate), thiram (tetra-
methylthiuram disulfide), ziram (zinc dimethyldithiocarbamate) and dazomet (3,5-dimethyl-1,3,5-2H-tetra-
hydrothiadiazine-2-thione). Preferred dithiocarbamates
are ethylenebisdithiocarbamates and their metal salts
and/or metal coordination products, more preferred
dithiocarbamates are maneb and mancozeb; and mancozeb
is the most preferred dithiocarbamate.

To make the compositions, the polymers are added
to dithiocarbamate in dry form which may however have
been diluted for use. By "dry form" is meant any dry
form of dithiocarbamate including dry powder, wettable
powder, dry flowable, dust, granules, dispersable
granules and a diluted dry form includes a dry form
which has been made into an aqueous form in preparation
for application of the dithiocarbamate. Dry form does
not include liquid flowable emulsions, liquid flowable
emulsion concentrates or liquid suspension
concentrates.

The polymer used in the composition of the
present invention is nonionic, water-soluble and has a
molecular weight sufficient to increase the rain
fastness of the dithiocarbamate. Preferred polymers
are hydroxy$(C_2-C_5)$alkyl cellulose having a molecular
weight of at least about 80,000, more preferably from
about 600,000 to about 1,000,000; poly(ethyleneoxide)
(pEO) having a molecular weight of at least about
80,000, more preferably from about 100,000 to about
500,000; poly(vinyl alcohol) having a molecular weight
of at least about 80,000 and a saponification index of
from about 45 to about 150, more preferably a molecular weight from about 95,000 to about 300,000; poly(vinyl pyrrolidone) having a molecular weight of at least about 40,000, more preferably from about 300,000 to about 600,000; poly(acrylamide) having a molecular weight of at least about 500,000, more preferably from about 700,000 to about 1,500,000; and poly(vinylmethylether) having a molecular weight of at least about 100,000, more preferably from about 200,000 to about 500,000.  Preferred polymers are hydroxy($C_2$-$C_5$)-alkyl cellulose, particularly hydroxyethyl cellulose, hydroxypropyl cellulose, hydroxypropylmethyl cellulose and hydroxybutylmethyl cellulose; poly(ethyleneoxide); poly(vinyl alcohol); and poly(vinyl pyrrolidone) all as previously described.  Most preferred polymers are poly(ethylene oxide) having a molecular weight from about 100,000 to about 500,000, and most particularly, hydroxyethyl cellulose having a molecular weight of from about 600,000 to about 1,000,000.

The upper limit of the molecular weight of the polymer is not critical and will be governed primarily by its viscoelastic properties it imparts to the aqueous mixture of the polymer and dithiocarbamate. Generally, the molecular weight of the polymer will not exceed about 1 million or about 1.5 million for a polyacrylamide polymer.  Molecular weights, unless otherwise specified are viscosity average molecular weights.

Generally, the amount of polymer added to enhance rain fastness will be from about 0.1 to about 5 weight percent based on the weight of dithiocarbamate, preferably from about 0.2 to about 1 weight percent by weight of the dithiocarbamate.  If the molecular weight of the polymer is high enough, then less than about 0.1% may be used.  At greater than about 5% weight percent of the polymer, the solution of the dithiocarbamate and polymer may be too viscous to allow for its uniform application. Additionally, as the amount of polymer increases and the rain fastness increases, then the ability of the dithiocarbamate to redistribute on the plant surface in the presence of water decreases.

The polymer can be blended directly with the dry form of the dithiocarbamate, for example by the use of mixing equipment. The polymer can be added to the dry dithiocarbamate after the dithiocarbamate has been formulated with water, for example, added to a tank mix of the dithiocarbamate. The polymer may be spray dried with sodium sulfate or sodium benzoate (for example a ratio of 2:1 based on weight) aqueous solution, and then the spray-dried material blended with the dry form of the dithiocarbamate or added to a tank mix with the dithiocarbamate. The last technique is particularly useful if the polymer is soft, i.e., has a low melting point. Additionally, the spray-dried polymer may dissolve more readily in a tank mix of the dithiocarbamate.

Generally, the higher the molecular weight of the polymer, the greater the adhesion of the dithiocarbamate has to the plant. Consequently, it may be desirable in some instances to add a second polymer, for example, a lower molecular weight water-soluble polymer having a molecular weight of from about 10,000 to about 150,000, which is either an ionic or, preferably, a nonionic polymer. Examples of suitable ionic polymers include sodium carboxymethyl cellulose, polyacrylate salts, salts of polyacrylate copolymers, lignosulfonates and alginate salts. Examples of suitable nonionic polymers include hydroxy$(C_1-C_5)$alkyl cellulose, polyethylene oxide, polyvinyl alcohol, polyvinyl pyrrolidone, polyacrylamide and polyvinylmethylether. The addition of the lower molecular weight polymer improves the redistribution properties of the dithiocarbamate; that is the ability of the dithiocarbamate to respread itself on a leaf surface after a dew or light rain. As an example, a balance of rain fastness and redistribution properties may be achieved from a mixture of about 0.5 weight percent of a 900,000 molecular weight hydroxyethyl cellulose and about 0.25 weight percent of a 125,000 molecular weight hydroxyethyl cellulose combined with a wettable powder form of a dithiocarbamate, e.g., mancozeb. Since dithiocarbamates are contact fungicides, the ability of the dithiocarbamate to redistribute itself is desirable as it will allow the fungicide to move to areas of the leaf surface not previously covered by the fungicide but which have been exposed to the fungus.

The polymer-containing dithiocarbamate compositions of the present invention are useful as agricultural fungicides and as such can be applied to various loci such as the seed, the soil or the foliage. For such purposes these compositions can be used in the technical or pure form as prepared, as solutions or as formulations. The compositions are usually taken up in a carrier or are formulated so as to render them suitable for subsequent dissemination as fungicides. For example, these compositions can be formulated as wettable powders, dusts, dry flowables, or granular formulations. In such formulations, the compositions can be extended with a solid carrier and, when desired, suitable surfactants are incorporated.

It may be desirable, particularly in the case of foliar spray formulations, to include adjuvants, such as wetting agents, spreading agents or dispersing agents, in accordance with agricultural practices. Such adjuvants commonly used in the art can be found in the John W. McCutcheon, Inc. publication "Detergents and Emulsifiers, Annual".

The concentration of the dithiocarbamate in the formulations for use may vary from about 1% to about 99% with a preferred range being from about 5% to about 90%.

Wettable powders suitable for spraying, can be prepared by admixing the composition of the present invention with a finely divided solid, such as clays, inorganic silicates and carbonates, and silicas and incorporating wetting agents, and/or dispersing agents in such mixtures. The concentration of active ingredients in such formulations is usually in the range of from about 20% to about 98%, preferably from about 40% to about 85%. A typical wettable powder is made by blending 91 parts of mancozeb (about 88% pure), 6.5 parts of a clay or talc and 0.5 parts of a polymer described herein.

Dusts are prepared by mixing the composition of the present invention with finely divided inert solids which can be organic or inorganic in nature. Materials useful for this purpose include botanical flours, silicas, silicates, carbonates and clays. One convenient method of preparing a dust is to dilute a wettable powder with a finely divided carrier. Dust concentrates containing from about 20% to about 80% of the active ingredient are commonly made and are subsequently diluted to from about 1% to about 10% use concentration.

The compositions of the present invention can be applied as fungicidal sprays by methods commonly employed, such as conventional high-gallonage hydraulic sprays, low-gallonage sprays, air-blast spray, aerial sprays and dusts. Dithiocarbamates have been used for years in a variety of applications, for example, vegetables, fruits and nuts, field crops, ornamentals, turf, conifers, seed profectant and soil fumigant. Consequently, the dilution and rate of application can be readily determined by one in the art depending upon the type of equipment used, the desired method, timing and frequency of applications, plants, seeds or soil to be treated and diseases to be controlled. Generally, however, the dithiocarbamates of the present invention will be applied in an amount of from about 0.25 to 28 kg/ha (0.25 to 25 lb/acre) of active ingredient when applied foliarly, from about 1.1 to 3.4 kg/ha (1 to 3 lb/acre) of active ingredient when applied to soil and from about 0.626 to 10 g of active ingredient per kg of seed (1 to 16 oz/100 lb).

The compositions of the present invention can be applied sequentially or in combination with other fungicides.

The following examples are illustrative of the invention.

Example 1

To test the rain fastness of various polymers an in vitro test was utilized. Polystyrene culture dishes were sprayed with the equivalent of 4.48 kg/ha; 234 1/ha of diluted product (4lb/acre; 25 gals/acre) of Dithane M-45 WP fungicide (a wettable powder form of mancozeb sold by Rohm and Haas Company) plus 1% by weight of the polymer based on the weight of the mancozeb, allowing the dishes to dry, spraying (raining) 5-7.6 cm (2-3 inches) of water on them and then visually estimating the amount of mancozeb remaining on the dishes as compared to the amount on the dish prior to the rain. Standards of the mancozeb wettable powder were also run in the same manner. The polymer-mancozeb compositions were prepared by first dissolving the polymer in water (room temperature) then adding the mancozeb wettable powder to the polymer solution. Several tests were conducted and each standard and polymer-mancozeb compositions of each test were run with from five to ten replicates. The replicates of each standard and composition were averaged and the results from each test were linearly normalized. (The value of the standard of each test was adjusted to a value of 20% and the results of the polymer-mancozeb compositions of the same test were adjusted by the same amount as the standard was). The normalized results are reported in Table 1.

## TABLE 1

Rain Retention of Mancozeb Wettable Powder on Polystyrene Culture Dishes

| Brand Name | Composition | Approximate Molecular Weight | % Rain* Retention (±5%) |
|---|---|---|---|
| Standard | Dithane M-45 (mancozeb) WP alone | | 20 |
| Natrosol[1] 250 JR | hydroxyethyl cellulose (HEC) | 80,000 | 40 |
| Natrosol 250 ER | hydroxyethyl cellulose (HEC) | 125,000 | 45 |
| Natrosol 250 GR | hydroxyethyl cellulose (HEC) | 225,000 | 55 |
| Natrosol 250 MR | hydroxyethyl cellulose (HEC) | 615,000 | 70 |
| Natrosol 250 MHR | hydroxyethyl cellulose (HEC) | 680,000 | 80 |
| Natrosol 250 HR | hydroxyethyl cellulose (HEC) | 890,000 | 90 |
| Klucel[2] L | hydroxypropyl cellulose (HPC) | 100,000 | 25 |
| Klucel M | hydroxypropyl cellulose (HPC) | 600,000 | 55 |
| Klucel H | hydroxypropyl cellulose (HPC) | 1,000,000 | 50 |
| Methocel[3] 60 HG | methyl cellulose | 250,000 | 30 |
| Methocel 90 HG | methyl cellulose | 500,000 | 60 |
| Methocel HB | methyl cellulose | 600,000 | 55 |
| Carbowax[4] 4000 | polyethylene oxide (pEO) | 10,000 | 15 |
| Polyox[5] WSRN-10 | polyethylene oxide (pEO) | 100,000 | 65 |
| Polyox WSRN-80 | polyethylene oxide (pEO) | 400,000 | 60 |
| PVP NPK[6]-30 | polyvinyl pyrrolidone | 40,000 | 50 |
| PVP NPK-90 | polyvinyl pyrrolidone | 360,000 | 60 |
| PVA 98% hydrolyzed[7] | polyvinyl alcohol | 16,000 | 30 |
| PVA 96% hydrolyzed[8] | polyvinyl alcohol | 95,000 | 50 |

---

[1] Natrosol products are made by Hercules, Inc.
[2] Klucel products are made by Hercules, Inc.
[3] Methocel products are made by Dow Chemical Company.
[4] Carbowax products are made by Union Carbide Corporation.
[5] Polyox products are made by Union Carbide Corporation.
[6] PVP NPK products are made by GAF Corporation.
[7] The saponification index is about 25.
[8] The saponification index is about 50.

- 12 -　　　　　　　　0245970

Example 2

The effect of adding polymers to mancozeb wettable powder (Dithane M-45 WP fungicide from Rohm and Haas Company) was also measured by spraying cucumbers with 4.48 kg pounds of the mancozeb per hectare (4 lb/acre) of cucumbers. The initial activity of the mancozeb and its activity after 5.1 cm (2 inches) of water were sprayed on the plants was determined by placing leaf plugs from the sprayed plants on growth mediums of Endomycopsis yeast, specifically Saccharomycopsis fibuligera. The zone of inhibition around each plug was measured. The results are listed in Table 2 grouped by individual tests. The larger the inhibition zone, the greater the fungicidal activity. The polymers were each added in a weight amount equal to 1% of the weight of the mancozeb by simply physically mixing the dry polymer with the dry mancozeb wettable powder then diluting with the appropriate amount of water (room temperature).

## TABLE 2

### Cucumber - Endomycopsis Test

| Composition | | Endomycopsis Inhibition* Zone (mm) | |
|---|---|---|---|
| | | Initial | 2" Rain |
| Test A: Dithane M-45 WP (4 lb./A) | | 35.4 | 12.3 |
| Dithane M-45 WP + Polyox WSR-N-10 | pEO | 32.8 | 20.7 |
| Dithane M-45 WP + Natrosol 250 JR | HEC | 36.7 | 19.0 |
| Dithane M-45 WP + Natrosol 250 ER | HEC | 38.2 | 19.2 |
| Dithane M-45 WP + Natrosol 250 GR | HEC | 38.4 | 19.8 |
| Dithane M-45 WP + Natrosol 250 MR | HEC | 33.2 | 25.9 |
| Dithane M-45 WP + Natrosol 250 MHR | HEC | 37.3 | 22.9 |
| Dithane M-45 WP + Natrosol 250 HR | HEC | 36.5 | 27.1 |
| Test B: Dithane M-45 WP (4 lb./A) | | 28.7 | 20.8 |
| Dithane M-45 WP + Klucel 7L[1] | HPC | 31.0 | 22.9 |
| Dithane M-45 WP + PVP NPK-30 | PVP | 30.7 | 20.9 |
| Test C: Dithane M-45 WP (4 lb./A) | | 19.1 | 8.4 |
| Dithane M-45 WP + Natrosol 250 H[2] | HEC | 18.8 | 17.8 |
| Test D: Dithane M-45 WP | | 17.5 | 11.2 |
| Dithane M-45 WP + Klucel EF[3] | HPC | 18.2 | 9.7 |

_____

[1] Molecular weight is about 100,000.
[2] Molecular weight is about 890,000.
[3] Molecular weight is about 60,000.

In its mechanical aspects therefore a process of the invention for improving the commercial value and/or profitability of vendible crops from plants whose growth is affected or likely to be affected by fungi comprises (1) charging to a container, fumigation device or mechanical dissemination device a fungicidal composition of the invention as hereinbefore described (2) using the container, fumigator or mechanical dissemination device to apply the fungicidal composition in the form of granules, dust, vapour or diluted dry form to growing plants or to the seeds thereof or to a growth medium where the plants are growing or are to be grown, or to the fungus itself, (3) controlling the dose of the active ingredient during this application step so that the rate of application of active fungicidal compound is sufficient to combat the fungi but is insufficient to cause an unacceptably adverse effect on the crop plants growing or to be grown in the treated area.

CLAIMS:

1.    A composition comprising dithiocarbamate in dry form, which may optionally have been diluted with liquid for use, and water-soluble nonionic polymer in an amount and having a molecular weight sufficient to increase the rain fastness of the dithiocarbamate when applied to foliage, seed or soil wherein the polymer comprises hydroxy$(C_2-C_5)$alkyl cellulose, polyethylene oxide, polyvinyl alcohol having a saponification index of from 45 to 150, polyvinyl pyrrolidone, polyacrylamide and/or polyvinylmethylether.

2.    A composition according to claim 1 wherein the polymer:  if hydroxy$(C_2-C_5)$alkyl cellulose or poly(ethylene oxide) or poly(vinylalcohol) has a molecular weight of at least about 80,000; if poly(vinyl pyrrolidone), has a molecular weight of at least about 40,000; if poly(acrylamide), has a molecular weight of at least 500,000; and if poly(vinylmethylether) has a molecular weight of at least about 100,000.

3.    A composition according to claim 2 containing the polymer in an amount of 0.1 to 5.0 weight percent based on the weight of the dithiocarbamate.

4.    A composition according to any preceding claim wherein the polymer: if hydroxy$(C_2-C_5)$alkyl cellulose, has a molecular weight of from 600,000 to 1,000,000; if poly(ethylene oxide), has a molecular weight of from 100,000 to 500,000; if poly(vinyl alcohol), has a molecular weight of from 95,000 to 300,000; if poly(vinyl pyrrolidone), has a molecular weight of from 300,000 to 600,000; if poly(acrylamide), has a molecular weight of from 700,000 to 1,500,000, and if poly(vinylmethylether), has a molecular weight of from 200,000 to 500,000.

5. A composition according to any preceding claim wherein the polymer is hydroxyethyl cellulose, hydroxypropyl cellulose, hydroxypropylmethyl cellulose or hydroxybutylmethyl cellulose.

6. A composition according to any preceding claim wherein the dithiocarbamate is an ethylene bisdithiocarbamate.

7. A composition according to claim 6 wherein the ethylene bisdithiocarbamate comprises mancozeb and/or maneb.

8. A method for combatting phytopathogenic fungi comprising applying to a plant, its habitat, plant seed or soil a fungicidally-effective amount of a composition according to any preceding claim.

CLAIMS: ES

1.      The use of (a) dithiocarbamate in dry form,
which may optionally have been diluted with liquid for
use, together with (b) water-soluble nonionic polymer
in an amount and having a molecular weight sufficient
to increase the rain fastness of the dithiocarbamate
when applied to foliage, seed or soil wherein the
polymer comprises hydroxy$(C_2-C_5)$alkyl cellulose,
polyethylene oxide, polyvinyl alcohol having a
saponification index of from 45 to 150, polyvinyl
pyrrolidone, polyacrylamide and/or polyvinylmethylether, to make a rain-resistant fungicidal composition.

2.      The use of a rain-resistant fungicidal
composition made in accordance with claim 1 for
combatting phytopathogenic fungi.

3.      A mechanical process for improving the
commercial value and/or profitability of vendible crops
from plants whose growth is affected or likely to be
affected by fungi comprises (1) charging to a
container, fumigation device or mechanical
dissemination device a rain-resistant fungicidal
composition made in accordance with claim 1, (2) using
the container, fumigator or mechanical dissemination
device to apply the composition, in the form of
granules, dust, vapour or diluted dry form to growing
plants or to the seeds thereof or to a growth medium
where the plants are growing or are to be grown, or to
the fungus itself, (3) controlling the dose of the
active ingredient during this application step so that
the rate of application of active fungicidal compound
is sufficient to combat the fungi but is insufficient
to cause an unacceptably adverse effect on the crop
plants growing or to be grown in the treated area.

4.     The use or process according to claim 1, 2 or 3 wherein the polymer:   if hydroxy $(C_2-C_5)$ alkyl cellulose or poly(ethylene oxide) or poly(vinylalcohol) has a molecular weight of at least about 80,000; if poly(vinyl pyrrolidone), has a molecular weight of at least about 40,000; if poly(acrylamide), has a molecular weight of at least 500,000; and if poly(vinylmethylether) has a molecular weight of at least about 100,000.

5.     The use or process according to any preceding claim wherein the composition contains the polymer in an amount of 0.1 to 5.0 weight percent based on the weight of the dithiocarbamate.

6.     The use or process according to any preceding claim wherein the polymer: if hydroxy $(C_2-C_5)$ alkyl cellulose, has a molecular weight of from 600,000 to 1,000,000; if poly(ethylene oxide), has a molecular weight of from 100,000 to 500,000; if poly(vinyl alcohol), has a molecular weight of from 95,000 to 300,000; if poly(vinyl pyrrolidone), has a molecular weight of from 300,000 to 600,000; if poly(acrylamide), has a molecular weight of from 700,000 to 1,500,000, and if poly(vinylmethylether), has a molecular weight of from 200,000 to 500,000.

7.     The use or process according to any preceding claim wherein the polymer is hydroxyethyl cellulose, hydroxypropyl cellulose, hydroxypropylmethyl cellulose or hydroxybutylmethyl cellulose.

8.     The use or process according to any preceding claim wherein the dithiocarbamate is an ethylene bisdithiocarbamate.

9.     The use or process according to claim 8 wherein
the ethylene bisdithiocarbamate comprises mancozeb
and/or maneb.

10.     The use according to any of claims 2 and 4 to 9,
for combatting phytopathogenic fungi, of the rain-
resistant fungicidal composition by applying it to a
plant, its habitat, plant seed, or soil in a
fungicidally-effective amount.

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | FR-A-1 296 118 (SIPCAM)<br>* Whole patent * | 1,6,8 | A 01 N 25/24<br>A 01 N 25/14<br>A 01 N 25/10 |
| A | --- | 2-4,7 | |
| X | DE-B-1 642 122 (RIEDEL-DE-HAEN)<br><br>* Column 1, lines 1-10; column 2, lines 17-54; example 6; claims *<br>--- | 1-3,6-8 | |
| X | GB-A-1 056 887 (ZIMMIE AG)<br><br>* Page 5, lines 48-95; page 6, line 107 - page 7, line 11; claims *<br>--- | 1-4,6-8 | |
| A | AU-A- 504 522 (CELANESE CORP.)<br>* Page 5, line 12 - page 6, line 21; page 10, line 17 - page 11, line 1; claims * & CENTRAL PATENTS INDEX, BASIC ABSTRACTS JOURNAL, C03-54361Y/31, Derwent Publications Ltd, London, GB, 1977, (Cat. D,A)<br>--- | 1-8 | **TECHNICAL FIELDS SEARCHED (Int Cl 4)**<br><br>A 01 N |
| A | FR-A-1 493 069 (RHONE-POULENC)<br>* Whole patent * & Chemical abstracts, vol. 72, 1970, abstract no. 11637a (Cat. D,A)<br>--- | 1-8 | |
| A | GB-A-1 209 996 (I.C.I.)<br>* Page 1, lines 12-39; page 1, line 88 - page 2, line 12; claims *<br>--- -/- | 1-8 | |

The present search report has been drawn up for all claims

| Place of search | Date of completion of the search | Examiner |
|---|---|---|
| THE HAGUE | 21-08-1987 | FLETCHER A.S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| A | US-A-4 447 413 (W.J. RIPPSTEIN) * Column 3, lines 17-60; claims * | 1-8 | |
| D,A | JOURNAL OF ECONOMIC ENTOMOLOGY, vol. 54, no. 3, June 1961, pages 508-510, College Park, Maryland, US; H.E. ALLER et al.: "Adjuvants increasing the residual activity of phosdrin" * Whole document * | 1-8 | |

TECHNICAL FIELDS SEARCHED (Int Cl 4)

The present search report has been drawn up for all claims

| Place of search | Date of completion of the search | Examiner |
|---|---|---|
| THE HAGUE | 21-08-1987 | FLETCHER A.S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82